Europäisches Patentamt

European Patent Office

Office européen des brevets

(11) Numéro de publication: **0 297 646 B1**

# (12) FASCICULE DE BREVET EUROPEEN

(45) Date de publication de fascicule du brevet: **20.01.93**

(51) Int. Cl.5: **C01B 13/32**, C01G 23/00, C01G 25/00

(21) Numéro de dépôt: **88201226.3**

(22) Date de dépôt: **16.06.88**

Le dossier contient des informations techniques présentées postérieurement au dépôt de la demande et ne figurant pas dans le présent fascicule.

(54) **Procédé pour la fabrication d'une poudre d'oxydes métalliques mixtes.**

(30) Priorité: **29.06.87 FR 8709116**

(43) Date de publication de la demande:
**04.01.89 Bulletin 89/01**

(45) Mention de la délivrance du brevet:
**20.01.93 Bulletin 93/03**

(84) Etats contractants désignés:
**AT BE CH DE ES FR GB GR IT LI LU NL SE**

(56) Documents cités:
EP-A- 0 079 392       EP-A- 0 125 507
EP-A- 0 177 198       EP-A- 0 238 103
EP-A- 0 263 544       EP-A- 0 286 155
DE-A- 3 538 440       US-A- 4 636 378

PATENT ABSTRACTS OF JAPAN, vol. 9, no. 222 (C-302)[1945], 9 septembre 1985, page 128 C 302; & JP-A-60 86 022 (MITSUBISHI KOGYO CEMENT K.K.) 15-05-1985

CHEMICAL ABSTRACTS, vol. 104, no. 18, 5 mai 1986, pages 347-348, résumé no. 154468m, Columbus, Ohio, US; & JP-A-60 246 254 (DAINIPPON INK AND CHEMICALS, INC.) 05-12-1985

PATENT ABSTRACTS OF JAPAN, vol. 8, no. 34 (C-210)[1471], 15 février 1984, page 130 C 210; & JP-A-58 198 491 (NIPPON SODA K.K.) 18-11-1983

(73) Titulaire: **SOLVAY**
**Rue du Prince Albert, 33**
**B-1050 Bruxelles(BE)**

(72) Inventeur: **Wautier, Henri**
**Rue Louis Catala, 19**
**B-7490 Braine-le-Comte(BE)**
Inventeur: **Lerot, Luc**
**Avenue du Centaure, 31**
**B-1200 Bruxelles(BE)**

(74) Mandataire: **Anthoine, Paul et al**
**SOLVAY Département de la Propriété Industrielle 310, rue de Ransbeek**
**B-1120 Bruxelles(BE)**

## Description

L'invention a pour objet un procédé pour la fabrication de poudres d'oxydes métalliques mixtes.

On sait que l'on peut fabriquer des poudres d'oxydes métalliques mixtes par hydrolyse d'un alcoolate métallique en présence d'un oxyde ou hydroxyde métallique, sous certaines conditions. A cet effet, dans le brevet US-A-4636378 (Hughes Aircraft Company), on décrit un procédé pour la fabrication d'une poudre de titanate de baryum présentant la structure cristalline tétragonale de la perovskite, selon lequel on introduit progressivement un alcoolate de titane dans une solution aqueuse d'hydroxyde de baryum, de manière à former un gel d'oxyde de titane hydraté, on chauffe ensuite le milieu réactionnel au-delà de 100°C dans un autoclave maintenu sous pression, puis, après l'avoir refroidi jusqu'à la température ambiante, on le soumet successivement à un réchauffage modéré à la pression atmosphérique et à une dialyse.

Ce procédé connu présente l'inconvénient d'une grande complexité et requiert un appareillage coûteux. Par ailleurs, la poudre obtenue présente une morphologie hétérogène, étant formée de grains irréguliers et présentant une granulométrie étendue.

L'invention remédie à cet inconvénient du procédé connu, en fournissant un procédé nouveau qui permet d'obtenir, de manière économique et aisée, des poudres d'oxydes métalliques mixtes à l'état de grains sphériques réguliers.

L'invention concerne dès lors un procédé pour la fabrication d'une poudre d'oxydes métalliques mixtes, dans lequel on hydrolyse au moins un alcoolate métallique en présence d'au moins un oxyde ou hydroxyde métallique; selon l'invention, l'hydrolyse est opérée en présence d'un composé organique acide contenant plus de 6 atomes de carbone dans la molécule.

Dans le cadre de l'invention, on entend désigner par poudre d'oxydes métalliques mixtes, une poudre qui contient des oxydes d'au moins deux métaux différents. Selon l'invention, la poudre peut contenir davantage que deux oxydes métalliques différents. Les oxydes métalliques mixtes sont, par définition, des solutions solides, c'est-à-dire des mélanges homogènes au niveau moléculaire ou ionique.

Dans le procédé selon l'invention, l'alcoolate métallique désigne tout composé dans lequel un métal est relié par l'intermédiaire d'un atome d'oxygène, à un groupement hydrocarboné tel qu'un groupement aromatique ou un groupement aliphatique linéaire ou cyclique, saturé ou insaturé, non substitué ou substitué partiellement ou totalement. Les alcoolates métalliques à groupements aliphatiques sont spécialement recommandés; ceux à groupements aliphatiques saturés ou substitués sont préférés, tels que, par exemple, les groupements méthyl, éthyl, n-propyl isopropyl, n-butyl et isobutyl. On peut mettre en oeuvre indifféremment un alcoolate métallique isolé ou un mélange d'alcoolates métalliques.

L'hydrolyse a pour fonction de décomposer l'alcoolate métallique. Elle est opérée en présence d'oxyde ou d'hydroxyde métallique, de manière à précipiter des oxydes métalliques mixtes. On peut mettre en oeuvre un oxyde ou un hydroxyde métallique isolé ou un mélange d'oxydes et/ou d'hydroxydes métalliques.

Selon l'invention, la cohydrolyse est opérée en présence d'un composé organique acide.

On entend désigner par composé organique acide un acide organique ou un dérivé d'un acide organique. Le dérivé d'acide organique peut avoir un caractère acide ou être dénué de caractère acide, en étant alors, par exemple, un corps neutre. Les acides carboxyliques saturés ou insaturés et leurs dérivés sont spécialement recommandés. Il convient de sélectionner des acides ou des dérivés d'acides contenant plus de six atomes de carbone dans leur molécule. Des acides carboxyliques qui se sont révélés spécialement avantageux sont ceux contenant au moins huit atomes de carbone dans leur molécule, tels que les acides octanoïque, laurique, palmitique, isopalmitique, oléique et stéarique. Les acides carboxyliques comprenant plus de dix atomes de carbone dans leur molécule sont préférés. Des exemples de dérivés d'acides organiques utilisables dans le procédé selon l'invention sont les anhydrides, les esters et les sels de ces acides.

On a observé que le composé organique acide agit sur la morphologie de la poudre d'oxydes métalliques mixtes, en inhibant l'agglomération des grains et en conférant à ceux-ci un profil sphérique. En règle générale, il doit être mis en oeuvre en quantité suffisante pour que son action se manifeste sur la morphologie de la poudre, en évitant toutefois de dépasser un seuil au-delà duquel son action sur la qualité de la poudre pourrait être négative. En pratique, la quantité optimum de composé organique acide qu'il convient de mettre en oeuvre dépend de nombreux paramètres parmi lesquels figurent notamment le composé organique acide sélectionné (principalement la longueur de sa chaîne carbonée), l'alcoolate et l'oxyde ou hydroxyde métalliques mis en oeuvre, ainsi que les conditions opératoires, et elle doit être déterminée dans chaque cas particulier en fonction de la qualité recherchée pour la morphologie de la poudre. En général, on recommande de mettre en oeuvre une masse de composé organique acide comprise entre 20 et 200 g par mole de tous les oxydes métalliques élémentaires formant l'oxyde métallique mixte à produire. Les quantités comprises entre 50 et 150 g sont préférées, dans le cas où le composé organique acide est sélectionné parmi les acides carboxyliques. Dans le cas où l'oxide métallique mixte à produire est le titanate de baryum, il est recommandé de mettre en oeuvre un acide carboxylique en quantité comprise entre 70 et 110 g par mole de tous les oxydes métalliques élémentaires.

L'hydrolyse peut être effectuée dans l'air ambiant. Toutefois, pour éviter une carbonatation de l'hydroxyde métallique basique, il est recommandé d'utiliser une atmosphère exempte de $CO_2$. Pour éviter le risque d'une décomposition incontrôlée de l'alcoolate métallique, on peut, selon une forme de réalisation particulière du procédé selon l'invention, exécuter l'hydrolyse sous une atmosphère gazeuse exempte d'humidité. L'air sec, déshydraté et décarbonaté, l'azote et l'argon sont des exemples d'atmosphères utilisables dans cette forme de réalisation de l'invention.

En principe, la température et la pression ne sont pas critiques. En général, dans la majorité des cas, on peut travailler à la température ambiante et la pression atmosphérique normale.

Dans l'exécution du procédé selon l'invention, l'hydrolyse est réglée pour précipiter les oxydes métalliques mixtes à l'état d'une poudre, sans former un gel. A cet effet, il est recommandé de réaliser un mélange homogène de l'alcoolate métallique, de l'oxyde ou hydroxyde métallique, de l'eau et du composé organique acide, le plus rapidement possible, avant que débute la nucléation. A cet effet, dans une forme d'exécution préférée du procédé selon l'invention, l'alcoolate métallique, l'oxyde ou hydroxyde métallique et l'eau sont mis en oeuvre à l'état de solutions organiques. Le cas échéant, il convient que le solvant organique de l'alcoolate soit exempt d'eau. Il convient par ailleurs d'éviter la présence de particules solides dans les solutions organiques. On peut utiliser des solvants organiques identiques ou différents pour l'alcoolate métallique, l'oxyde ou hydroxyde métallique et l'eau. Dans le cas de solvants organiques différents, il convient généralement que ceux-ci soient miscibles. Les alcools et leurs dérivés conviennent bien, notamment le méthanol, l'éthanol, le n-propanol, l'isopropanol, le n-butanol et l'isobutanol. Les taux de dilution optimum de l'alcoolate métallique, de l'oxyde ou hydroxyde métallique et de l'eau dans leurs solvants organiques respectifs dépendent de divers facteurs, notamment de l'alcoolate mis en oeuvre, de la quantité et de la nature du composé organique acide sélectionné, de la température de travail et de la qualité recherchée pour la poudre d'oxydes métalliques; ils doivent être déterminés dans chaque cas particulier par un travail de routine au laboratoire. Par exemple, on peut avantageusement mettre en oeuvre des solutions alcooliques dont les teneurs respectives en alcoolate métallique et en hydroxyde ou oxyde métallique n'excèdent pas 5 moles par litre et sont de préférence comprises entre 0,02 et 0,5 mole par litre.

Cette forme d'exécution préférée du procédé selon l'invention est notamment adaptée à la mise en oeuvre d'oxydes ou d'hydroxydes de métaux sélectionnés parmi le baryum, le strontium, le bore, le sélénium, le tellure et ceux du groupe la du tableau périodique des éléments tels que le sodium, le potassium, le rubidium et le césium. L'alcoolate métallique peut être tout alcoolate métallique susceptible d'être converti, par hydrolyse, en oxyde ou hydroxyde métallique correspondant; à titres d'exemples non limitatifs, le procédé selon l'invention s'applique à la mise en oeuvre d'alcoolates de métaux sélectionnés parmi Li, Na, K, Be, Mg, Ca, Sr, Ba, Ti, Zr, Nb, Ta, Mn, Fe, Co, Cu, Zn, Cd, Al, Ga, In, Si, Ge, Sn, Pb, As, Sb, Bi, Te, Y, La et les terres rares telles que Nd, Sm, Eu et Gd (Ferroelectronics, Vol. 49, 1983, pages 285-296 : "Ultrafine Electroceramic Powder Preparation from Metal Alkoxides").

Divers modes opératoires sont possibles pour exécuter le procédé selon l'invention.

Selon un premier mode opératoire, on introduit séparément mais simultanément, dans une chambre de réaction, le composé organique acide ainsi que des solutions, dans un solvant organique, de l'alcoolate métallique, de l'oxyde ou hydroxyde métallique et de l'eau.

Selon un second mode opératoire, qui est préféré, on réalise d'abord un prémélange homogène de l'hydroxyde ou oxyde métallique avec l'eau dans un solvant organique commun, par exemple un alcool, on ajoute le composé organique acide à l'alcoolate métallique, puis on réunit l'ensemble des réactifs.

Dans chacun de ces modes opératoires, on peut opérer de la manière exposée dans la demande de brevet GB-A-2168334.

Dans une variante avantageuse de chacun des modes opératoires qui viennent d'être décrits, on met en oeuvre un hydroxyde métallique hydraté, en solution dans un solvant organique, l'eau d'hydratation de l'hydroxyde métallique constituant une partie au moins de l'eau nécessaire à la réaction d'hydrolyse. On préfère sélectionner un hydroxyde métallique hydraté dont le taux d'hydratation est suffisant pour apporter la totalité de l'eau nécessaire à l'hydrolyse de l'alcoolate métallique.

A l'issue de la réaction d'hydrolyse, on recueille une poudre de fines particules constituées d'un mélange complexe d'oxydes métalliques à l'état amorphe, plus ou moins hydratés, et de résidus organiques. La poudre est formée, pour l'essentiel, de particules généralement sphériques, présentant un diamètre n'excédant pas 5 microns, habituellement compris entre 0,05 et 2 microns.

La poudre peut éventuellement subir un séchage et un traitement thermique à une température appropriée, pour éliminer le composé organique acide, l'eau et les solvants organiques qu'elle contient. Le traitement thermique peut être réglé pour contrôler la porosité ou l'éliminer complètement. Il peut par ailleurs être réglé pour provoquer une cristallisation des oxydes métalliques.

Le procédé selon l'invention est bien adapté à la production de poudres d'oxydes métalliques mixtes, destinées à la mise en oeuvre de matériaux céramiques qui, par définition, sont des matériaux inorganiques non métalliques, dont la mise en oeuvre au départ d'une poudre requiert des traitements à haute température, tels que des traitements de fusion ou de frittage (P. William Lee - "Ceramics" - 1961 - Reinhold Publishing Corp. - page 1; Kirk Othmer Encyclopedia of Chemical Technology - Third edition - Volume 5 - 1979, John Wiley & Sons, USA - pages 234 à 236 : "Ceramics, scope"). Le procédé selon l'invention trouve notamment une application intéressante pour la production de poudres d'oxydes métalliques mixtes de formule générale :

$ABO_3$

dans laquelle A désigne le baryum et/ou le strontium et B désigne au moins un métal à la valence 4, du groupe 4 du tableau périodique des éléments. Des exemples de tels oxydes métalliques mixtes sont le titanate de baryum, le titanate de strontium, le zirconate de baryum, le zirconate de strontium, le métasilicate de baryum, le silicate mixte de baryum et de zirconium et les mélanges de ces composés, dont certains trouvent une application intéressante dans la fabrication des semi-conducteurs.

Le procédé selon l'invention s'applique aussi à la production de poudres d'oxydes métalliques mixtes associant plus de deux oxydes métalliques différents, telles que, par exemple, des poudres La-Ba-Cu-O, des poudres La-Sr-Cu-O ou des poudres Y-Ba-Cu-O qui présentent un caractère supraconducteur remarquable (La Recherche, n° 187, avril 1987, pages 512 à 515 : "Des supraconducteurs sur le chemin des 100 kelvins").

Les poudres d'oxydes métalliques mixtes obtenues par le procédé selon l'invention sont constituées de grains sphériques. Elles se particularisent par une homogénéité chimique remarquable, une distribution granulométrique peu étendue et une quasi absence d'agglomérats.

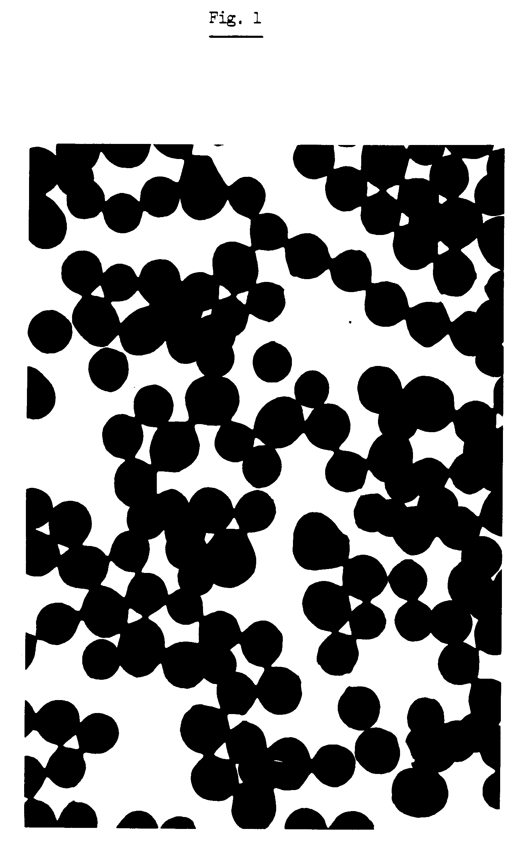

Les quelques exemples dont la description va suivre servent à illustrer l'invention. Ces exemples sont donnés en référence aux figures 1 à 5 annexées qui sont cinq reproductions photographiques de poudres d'oxydes métalliques mixtes conformes à l'invention, observées au microscope à transmission électronique, au grossissement 20000 X.

Les exemples 1 à 3 exposés ci-dessous concernent des essais de fabrication de poudres de titanate de baryum, selon le processus opératoire suivant, conforme à l'invention.

On a préparé séparément, sous atmosphère d'azote anhydre, d'une part une solution d'alcoolate de titane dans de l'alcool et, d'autre part, une solution d'hydroxyde de baryum monohydraté dans de l'alcool. Les deux solutions obtenues ont été filtrées sur un filtre de 0,2 micron d'ouverture de pores, accessible dans le commerce sous la marque MILLIPORE (MILLIPORE CORPORATION).

Après avoir additionné une quantité réglée d'acide carboxylique à la solution d'alcoolate de titane, on a introduit les deux solutions dans une chambre de réaction maintenue sous atmosphère d'azote anhydre et on les a soumises à une agitation intense pour obtenir rapidement un mélange réactionnel homogène avant que débute une nucléation. On a ensuite fait subir au mélange réactionnel un mûrissage de 2 heures sous agitation modérée, à 60°C. A l'issue du mûrissage, on a soumis le mélange réactionnel à une centrifugation et on a recueilli une poudre de titanate de baryum que l'on a lavée avec de l'alcool puis séchée dans un courant d'azote à la température ambiante.

Dans les exemples, on a calculé le diamètre moyen des poudres de titanate de baryum à partir de mesures sur les reproductions photographiques, le diamètre moyen étant défini par la relation suivante (G. Herdan - "Small particles statistics" - 2ème édition - 1960 - Butterworths - pages 10 et 11) :

$$d = \frac{\Sigma n_i d_i}{\Sigma n_i}$$

où $n_i$ désigne le nombre de particules de diamètre $d_i$.

Exemple 1

Cet exemple se caractérise par les conditions opératoires suivantes :
- solution d'alcoolate de titane : 65 ml d'une solution 0,2 molaire de n-propoxyde de titane dans du n-propanol, à 25°C;
- solution d'hydroxyde de baryum : 200 ml d'une solution 0,065 molaire d'hydroxyde de baryum monohydraté dans un mélange de méthanol et de n-propanol (dans le rapport de 1 volume de méthanol pour 2 volumes de propanol), à 25°C;
- acide carboxylique : 2,85 ml d'acide oléique.

Pour exécuter l'essai, on a d'abord additionné l'acide oléique et 57,15 ml de n-propanol, à la solution de n-propoxyde de titane et le prémélange résultant a été introduit dans la chambre de réaction, où on l'a porté à 60°C. Ensuite, on y a ajouté en une fois la solution d'hydroxyde de baryum hydraté à 25°C. La température du milieu réactionnel dans la chambre de réaction s'est établie à 45°C environ.

La poudre amorphe obtenue à l'issue du séchage est représentée à la figure 1. Elle présente un diamètre moyen de particules égal à 0,59 $\mu$m.

Exemple 2

On a mis en oeuvre les réactifs suivants :
- solution d'alcoolate de titane : 200 ml d'une solution 0,05 molaire d'isopropoxyde de titane dans un mélange de méthanol et d'isopropanol (50:50 % en volume);
- solution d'hydroxyde de baryum hydraté : 200 ml d'une solution 0,05 molaire d'hydroxyde de baryum monohydraté dans un mélange de méthanol et d'isopropanol (50:50 % en volume);
- acide carboxylique : 2 ml d'acide oléique.

On a d'abord introduit la solution d'isopropoxyde de titane et l'acide oléique dans la chambre de réaction, on y a chauffé ce prémélange à 60°C, puis, tout en le maintenant sous forte agitation, on y a ajouté la solution d'hydroxyde de baryum à 25°C. La température du milieu réactionnel s'est établie à 45°C environ. On a ensuite poursuivi l'essai de la manière exposée plus haut.

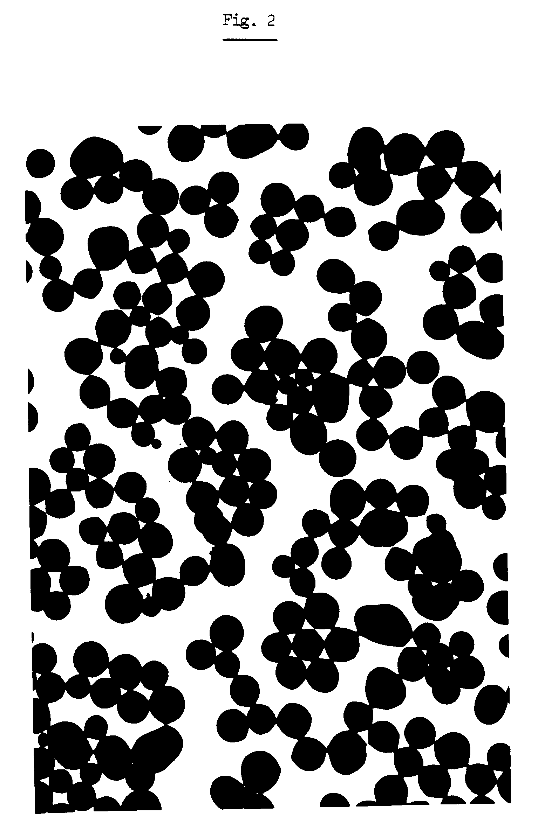

La poudre obtenue à l'issue de l'essai est représentée à la figure 2. Elle présente un diamètre moyen de particules égal à 0,35 $\mu$m.

Exemple 3

On a reproduit les conditions de l'exemple 1, en modifiant l'ordre d'introduction des réactifs dans la chambre de réaction. A cet effet, on a d'abord introduit la solution d'hydroxyde de baryum dans la chambre de réaction, maintenue à 25°C. On y a ensuite ajouté, en une fois, le prémélange formé de l'acide oléique, du n-propoxyde de titane et du n-propanol, à 25°C.

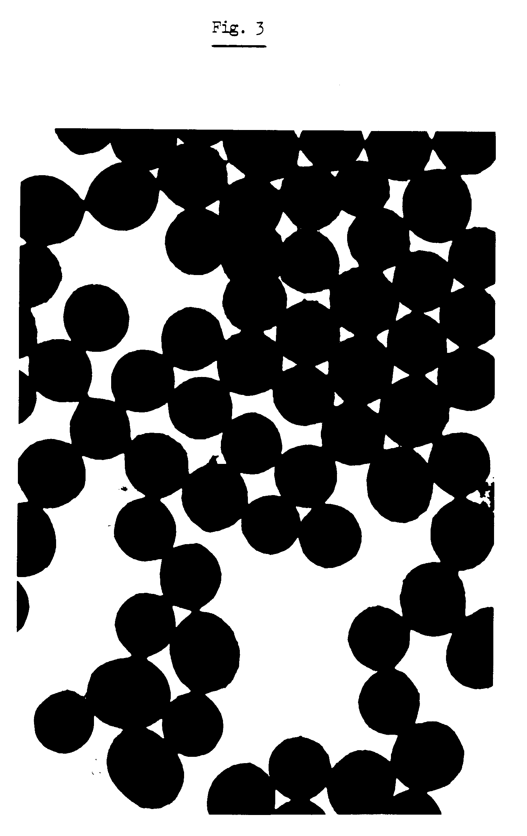

La poudre obtenue à l'issue du séchage est représentée à la figure 3. Elle présente un diamètre moyen de particules égal à 0,75 $\mu$m.

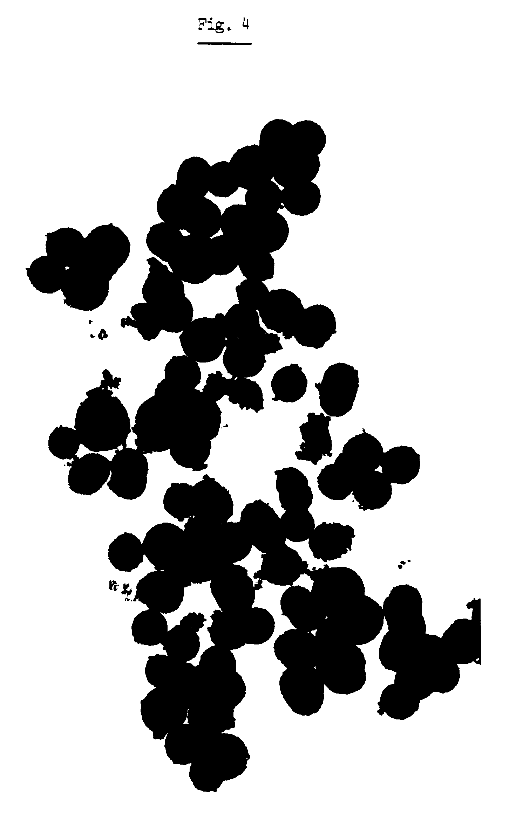

On a poursuivi l'essai en soumettant la poudre recueillie du séchage à un traitement thermique à 650°C, à l'air. A l'issue de ce traitement thermique, on a recueilli une poudre cristallisée, visible à la figure 4.

Exemple 4

Cet exemple concerne la préparation, conformément à l'invention, d'une poudre d'oxydes mixtes de titane, de zirconium, de baryum et de strontium.

On a d'abord introduit, dans une chambre de réaction maintenue sous atmosphère d'azote anhydre :
- 32 ml d'une solution 0,2 molaire de n-propoxyde de titane dans du n-propanol,
- 8 ml d'une solution 0,2 molaire de n-propoxyde de zirconium dans du n-propanol,
- 1,75 ml d'acide oléique,
- 58,25 ml de propanol.

On a porté le mélange à 60°C puis, en le maintenant sous forte agitation, on y a ajouté, en une seule fois, le mélange des solutions suivantes, à 25°C :
- 80 ml d'une solution 0,08 molaire d'hydroxyde de baryum monohydraté dans un mélange de méthanol et de propanol (30:70 % en volume),
- 20 ml d'une solution 0,08 molaire d'hydroxyde de strontium monohydraté dans du méthanol.

La température du milieu réactionnel dans la chambre de réaction s'est établie à 45°C environ.

On a ensuite fait subir au mélange réactionnel un mûrissage de 2 heures à 60°C, sous agitation modérée. A l'issue du mûrissage, on a soumis le mélange réactionnel à une centrifugation et on a recueilli une poudre d'oxydes mixtes de titane, de zirconium, de baryum et de strontium. La poudre a été lavée avec de l'alcool puis séchée dans un courant d'azote à la température ambiante.

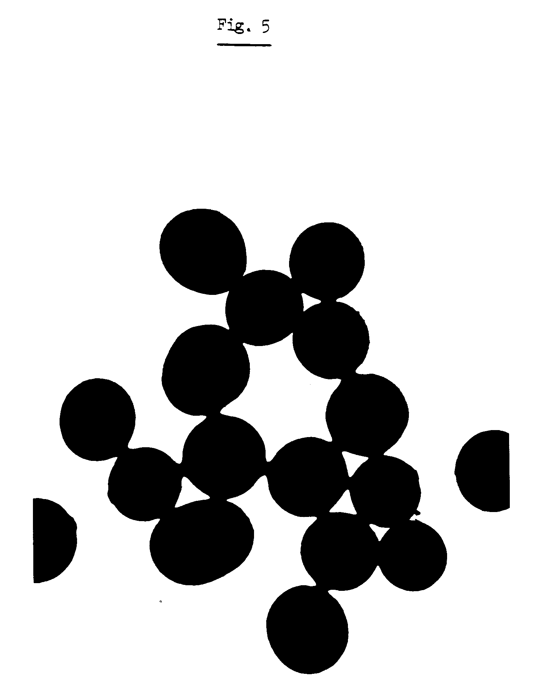

La poudre obtenue est visible à la figure 5. Elle présente un diamètre moyen de particules égal à 0,98 $\mu$m.

**Revendications**

1. Procédé pour la fabrication d'une poudre d'oxydes métalliques mixtes, dans lequel on hydrolyse au moins un alcoolate métallique en présence d'au moins un oxyde ou hydroxyde métallique, caractérisé en ce que l'hydrolyse est opérée en présence d'un composé organique acide constitué par un acide organique ou par un dérivé d'un acide organique contenant plus de 6 atomes de carbone dans la molécule et que l'alcoolate métallique, l'oxyde ou hydroxyde métallique et l'eau sont mis en oeuvre à l'état de solutions organiques.

**2.** Procédé selon la revendication 1, caractérisé en ce qu'on sélectionne le composé organique acide parmi les acides carboxyliques contenant au moins 8 atomes de carbone dans la molécule et les dérivés de ces acides.

**3.** Procédé selon la revendication 1 ou 2, caractérisé en ce que le composé organique acide est mis en oeuvre en une quantité comprise entre 20 et 200 g par mole de tous les oxydes métalliques élémentaires formant l'oxyde métallique mixte à produire.

**4.** Procédé selon l'une quelconque des revendications 1 à 3, caractérisé en ce que, pour réaliser l'hydrolyse, on mélange l'alcoolate métallique, l'oxyde ou hydroxyde métallique, l'eau et le composé organique acide de manière à réaliser un mélange homogène avant que débute une nucléation.

**5.** Procédé selon l'une quelconque des renvendications 1 à 4, caractérisé en ce qu'on met en oeuvre un hydroxyde métallique hydraté.

**6.** Procédé selon la revendication 5, caractérisé en ce qu'on sélectionne l'oxyde ou hydroxyde métallique parmi les oxydes et les hydroxydes de baryum, de strontium, de bore, de sélénium, de tellure et des métaux du groupe la du tableau périodique des éléments.

**7.** Procédé selon l'une quelconque des revendications 1 à 6, caractérisé en ce qu'on soumet la poudre recueillie de l'hydrolyse, à un traitement thermique.

**8.** Utilisation du procédé selon l'une quelconque des revendications 1 à 7 pour l'obtention de poudres d'oxydes métalliques mixtes formées de grains sphériques dont le diamètre est compris entre 0,05 et 2 microns.

**9.** Utilisation du procédé selon la revendication 7 pour l'obtention de poudres d'oxydes métalliques mixtes de formule générale :

$ABO_3$

dans laquelle A désigne le baryum et/ou le strontium et B désigne au moins un métal à la valence 4 du groupe 4 du tableau périodique des éléments.

**10.** Utilisation du procédé selon la revendication 9, dans laquelle le composé $ABO_3$ est le titanate de baryum.

**Claims**

**1.** Process for the manufacture of a mixed metal oxide powder, in which at least one metal alcoholate is hydrolysed in the presence of at least one metal oxide or hydroxide, characterised in that the hydrolysis is performed in the presence of an acidic organic compound consisting of an organic acid or of an organic acid derivative containing more than 6 carbon atoms in the molecule and in that the metal alcoholate, the metal oxide or hydroxide and water are used in the form of organic solutions.

**2.** Process according to Claim 1, characterised in that the acidic organic compound is chosen from carboxylic acids containing at least 8 carbon atoms in the molecule and derivatives of these acids.

**3.** Process according to Claim 1 or 2, characterised in that the acidic organic compound is used in a quantity of between 20 and 200 g per mole of all the elementary metal oxides forming the mixed metal oxide to be produced.

**4.** Process according to any one of Claims 1 to 3, characterised in that, to carry out the hydrolysis, the metal alcoholate, the metal oxide or hydroxide, water and the acidic organic compound are mixed so as to produce a homogeneous mixture before nucleation commences.

**5.** Process according to any one of Claims 1 to 4, characterised in that a metal hydroxide hydrate is used.

**6.** Process according to Claim 5, characterised in that the metal oxide or hydroxide is chosen from the oxides and hydroxides of barium, strontium, boron, selenium, tellurium and metals of Group 1a of the Periodic Table of the elements.

**7.** Process according to any one of Claims 1 to 6, characterised in that the powder recovered from hydrolysis subjected to a heat treatment.

**8.** Use of the process according to any one of Claims 1 to 7, to obtain mixed metal oxide powders consisting of spherical particles whose diameter is between 0.05 and 2 microns.

**9.** Use of the process according to Claim 7 to obtain mixed metal oxide powders of general formula:

$ABO_3$

in which A denotes barium and/or strontium and B denotes at least one metal of valency 4 of Group 4 of the Periodic Table of the elements.

10. Use of the process according to Claim 9, in which the compound $ABO_3$ is barium titanate.

## Patentansprüche

1. Verfahren zur Herstellung eines Pulvers von gemischten Metalloxiden, in dem man wenigstens ein metallisches Alkoholat in Gegenwart von wenigstens einem metallischen Oxid oder Hydroxid hydrolysiert, dadurch gekennzeichnet, daß die Hydrolyse in Gegenwart einer sauren, organischen Verbindung, dargestellt durch eine organische Säure oder durch ein Derivat einer organischen Säure, die mehr als sechs Kohlenstoffatome in dem Molekül enthält, durchgeführt wird und, daß das metallische Alkoholat, das metallische Oxid oder Hydroxid und das Wasser im Zustand von organischen Lösungen eingesetzt werden.

2. Verfahren nach Anspruch 1, dadurch gekennzeichnet, daß man die saure organische Verbindung auswählt aus den Carboxylsäuren, die wenigstens acht Kohlenstoffatome in dem Molekül enthalten, und den Derivaten dieser Säuren.

3. Verfahren nach Anspruch 1 oder 2, dadurch gekennzeichnet, daß die saure organische Verbindung in einer Menge zwischen 20 und 200 g pro Mol der gesamten elementaren Metalloxide, die das herzustellende gemischte Metalloxid bilden, eingesetzt wird.

4. Verfahren nach einem der Ansprüche 1 bis 3, dadurch gekennzeichnet, daß man zur Durchführung der Hydrolyse das metallische Alkoholat, das metallische Oxid oder Hydroxid, das Wasser und die saure, organische Verbindung auf eine solche Art mischt, daß man eine homogene Mischung erhält bevor eine Kristallkeimbildung beginnt.

5. Verfahren nach einem der Ansprüche 1 bis 4, dadurch gekennzeichnet, daß man ein wasserhaltiges metallisches Hydroxid einsetzt.

6. Verfahren nach Anspruch 5, dadurch gekennzeichnet, daß man das metallische Oxid oder Hydroxid auswählt unter den Oxiden und den Hydroxiden von Barium, Strontium, Bor, Selen, Tellur und den Metallen der Gruppe 1a des Periodensystems der Elemente.

7. Verfahren nach einem der Ansprüche 1 bis 6, dadurch gekennzeichnet, daß man das von der Hydrolyse gesammelte Pulver einer thermischen Behandlung unterzieht.

8. Verwendung des Verfahrens nach einem der Ansprüche 1 bis 7 zum Erhalt von gemischten Metalloxidpulvern, gebildet von kugeligen Körnchen, deren Durchmesser zwischen 0,05 und 2 Mikron beträgt.

9. Verwendung des Verfahrens nach Anspruch 7 zum Erhalt von Pulvern von gemischten Metalloxiden der allgemeinen Formel:

$ABO_3$

worin A Barium und/oder Strontium bezeichnet und B wenigstens ein Metall mit der Wertigkeit 4 der Gruppe 4 des Periodensystems der Elemente bezeichnet.

10. Verwendung des Verfahrens nach Anspruch 9, in dem die Verbindung $ABO_3$ Bariumtitanat ist.

Fig. 1

Fig. 2

Fig. 3

Fig. 4

Fig. 5